# EUROPÄISCHE PATENTSCHRIFT

(11) **EP 3 735 722 B1**
(45) Veröffentlichungstag und Bekanntmachung des Hinweises auf die Patenterteilung: **12.01.2022**
(21) Anmeldenummer: 20714107.8
(22) Anmeldetag: 05.03.2020
(51) Int. Cl.: H01R 13/514, H01R 13/6586

(54) **KONTAKTTRÄGER UND STECKVERBINDER FÜR EINE GESCHIRMTE HYBRIDE KONTAKTANORDNUNG**
CONTACT CARRIER AND PLUG CONNECTOR FOR A SHIELDED HYBRID CONTACT ASSEMBLY
SUPPORT DE CONTACT ET CONNECTEUR POUR UN AGENCEMENT DE CONTACTS HYBRIDE BLINDÉ

(30) Priorität: 19.03.2019 DE 102019106980
(43) Veröffentlichungstag der Anmeldung: 11.11.2020
(73) Patentinhaber: HARTING Electric GmbH & Co. KG, 32339 Espelkamp (DE)
(72) Erfinder: HÄMMERLING, Sergej, 32339 Espelkamp (DE)
(86) Internationale Anmeldenummer: PCT/DE2020/100148
(87) Internationale Veröffentlichungsnummer: WO 2020/187356

(56) Entgegenhaltungen:
- DE-A1-102015 119 087
- DE-U1-202012 008 970
- US-B1- 6 494 743
- "Connectors for electronic equipment - Product requirements - Part 2-113: Circular connectors - Detail specification for connectors with M12 screw locking with power and signal contacts for data transmission with frequency up to 100 MHz", IEC 61076-2-113:2017, IEC, 3, RUE DE VAREMBÉ, PO BOX 131, CH-1211 GENEVA 20, SWITZERLAND, 21. Februar 2017 (2017-02-21), Seiten 1-72, XP082011375, [gefunden am 2017-02-21] in der Anmeldung erwähnt

## Beschreibung

Die Erfindung geht aus von einem Kontaktträger für einen Steckverbinder, für eine geschirmte hybride Kontaktanordnung nach dem Oberbegriff des unabhängigen Anspruchs 1.

Desweiteren geht die Erfindung aus von einem System, gebildet aus einem Y-förmigen Schirmelement, sowie mindestens vier, bevorzugt acht, Crimpkontakten, von denen von denen mindestens zwei, bevorzugt vier, als Signalkontakte und mindestens zwei, bevorzugt vier, als Energiekontakte ausgeführt sind und einem Kontaktträger gemäß dem unabhängigen Anspruch 1.

Dabei beinhaltet die Zahlenangabe "mindestens zwei, bevorzugt vier" sinngemäß, dass beispielsweise auch mindestens vier und damit auch mehr als vier Energiekontakte bzw. Signalkontakte vorgesehen sein können. Mindestens vier, bevorzugt acht Crimpkontakte beinhaltet in gleicher Weise, dass auch mindestens acht Crimpkontakte, also z.B. mehr als acht Crimpkontakte, vorgesehen sein können.

Desweiteren betrifft die Erfindung einen Steckverbinder, der ein solches System aufweist.

Außerdem betrifft die Erfindung ein Verfahren zur Montage eines solchen Systems.

Derartige Kontaktträger werden benötigt, um mehrere elektrische Signal- und Energiekontakte in einem Steckverbinder gegeneinander abgeschirmt zu halten.

### Stand der Technik

Im Stand der Technik sind Steckverbinder mit Schirmelementen zur Signaltrennung vier verschiedener differentieller Signalpaare beispielsweise aus der Druckschrift EP 2 745 354 A1 bekannt. Aufgrund seiner Form kann ein dafür geeignetes Schirmelement auch als "Schirmkreuz" oder als "X-förmig" oder "X-kodiert" bezeichnet werden. Beispielsweise zeigt die Druckschrift DE 10 2015 119 087 A1 einen Hybrid-Steckverbinder mit einem Kontaktträger gemäß dem Oberbegriff von Anspruch 1. Mit solchen hybriden Übertragungskontaktanordnungen" sind sowohl elektrische Energie als auch elektrische Signale übertragbar. Während die in dieser Druckschrift offenbarte Anordnung ein Schirmgehäuse verwendet, sind für solche Hybridsteckverbinder beispielsweise aus der Norm/ dem internationalen Standard IEC 61076-2-113 auch "Y-förmige Schirmelemente" bekannt. Durch ein solches Y-förmiges Schirmelement können in einem Kontaktträger beispielsweise zwei Paare differentieller Signalübertragungssteckkontakte voneinander und zudem von ebenfalls im Kontaktträger gehaltenen elektrischen Energieübertragungssteckkontakten abgeschirmt werden. Dabei sind die Steckkontakte bauartbedingt bereits werkseitig fest in den Kontaktträger integriert. Dies kann beispielsweise geschehen, indem die Steckkontakte zusammen mit dem Schirmkreuz mit Kunststoff umspritzt werden, wobei der Kunststoff den Kontaktträger bildet. Somit können die Steckkontakte bei dem Anschluss, der Montage und/oder der Installation des Steckverbinders dem Kontaktträger nicht mehr entnommen werden. Bei diesen Steckkontakten kann es sich beispielswiese um Lötkontakte handeln, die also kabelanschlussseitig einen Lötanschluss besitzen und bei der Installation vom Anwender des Steckverbinders z.B. durch Anlöten von Adern eines mehradrigen elektrischen Kabels für die jeweilige Anwendung frei belegbar sind.

Nachteilig bei diesem Stand der Technik ist, dass keine Steckverbinder, insbesondere mit einem Mittenkontakt, existieren, welche derartige Y-kodierte Schirmungen feldkonfektionierbar für Crimpkontakte ermöglichen.

Das Deutsche Patent- und Markenamt hat in der Prioritätsanmeldung zu vorliegender Anmeldung den folgenden Stand der Technik recherchiert: DE 10 2015 210 336 A1, US 6,494,743 B1, EP 3 104 469 A1, DE 10 2010 051 954 B3 und US 2016/0049747 A1.

### Aufgabenstellung

Die Aufgabe der Erfindung besteht darin, einen Kontaktträger für einen Steckverbinder anzugeben, der eine derartige Y-Kodierung auch für Crimpkontakte zulässt.

Diese Aufgabe wird durch die Merkmale des kennzeichnenden Teils des unabhängigen Anspruchs 1 gelöst.

Ein Kontaktträger für einen Steckverbinder ist zur Aufnahme mindestens vier, bevorzugt acht, elektrischer Crimpkontakte vorgesehen. Mindestens zwei, bevorzugt vier, der Crimpkontakte sind als Signalkontakte ausgeführt und mindestens zwei, bevorzugt vier, weitere der Crimpkontakte sind als Energiekontakte ausgeführt.

Der Kontaktträger besitzt dazu mindestens zwei, bevorzugt vier, Signalkontaktaufnahmen und mindestens zwei, bevorzugt vier, Energiekontaktaufnahmen. Weiterhin ist der Kontaktträger mehrteilig ausgeführt. Ein erstes Kontaktträgerteil weist die zumindest zwei, bevorzugt vier, Signalkontaktaufnahmen auf. Ein zweites Kontaktträgerteil weist zumindest eine, bevorzugt mindestens drei, der Energiekontaktaufnahmen auf. Eine weitere der Energiekontaktaufnahmen ist als Mittenkontaktaufnahme im Kontaktträger zwischen dem ersten und dem zweiten Kontaktträgerteil angeordnet.

Dabei kann diese Mittenkontaktaufnahme zumindest größtenteils im ersten Kontaktträgerteil oder zumindest größtenteils im zweiten Kontaktträgerteil oder zu gleichen Teilen im ersten und im zweiten Kontaktträgerteil angeordnet sein.

Die Mittenkontaktaufnahme dient der Aufnahme eines der Energiekontakte, bei dem es sich um einen Mittenkontakt handelt. Somit besitzt der gesamte Kontaktträger insgesamt mindestens vier, bevorzugt acht, Kontaktaufnahmen. Eines der beiden besagten Kontaktträgerteile, bevorzugt das erste Kontaktträgerteil, weist eine Halterung auf, durch die im Kontaktträger bevorzugt ein Y-förmiger Aufnahmeschlitz gebildet ist. An der Halterung ist, insbesondere durch den Y-förmigen Aufnahmeschnitz, ein Y-förmiges Schirmelement haltbar, durch welches zumindest zwei Signalkontaktaufnahmen sowohl voneinander als auch von den Energiekontaktaufnahmen trennbar sind. Insbesondere kann das erste Kontaktträgerteil vier Signalkontaktaufnahmen besitzen und es können somit zwei Paare von Signalkontaktaufnahmen sowohl voneinander als auch von den Energiekontakten durch das Schirmelement getrennt werden. Dies ist besonders vorteilhaft für die differentielle Signalübertragung.

Dabei beinhaltet die Zahlenangabe "mindestens zwei, bevorzugt vier" sinngemäß, dass beispielsweise auch mindestens vier und damit auch mehr als vier Energiekontaktaufnahmen bzw. Signalkontaktaufnahmen im Kontaktträger vorgesehen sein können. Mindestens vier, bevorzugt acht Kontaktaufnahmen beinhaltet in gleicher Weise, dass insgesamt auch mindestens acht, also z.B. mehr als acht Kontaktaufnahmen im Kontaktträger vorgesehen sein können.

Vorteilhafte Ausgestaltungen der Erfindung sind in den Unteransprüchen angegeben.

Die Erfindung hat den besonderen Vorteil, dass als Steckkontakte nun auch Crimpkontakte in einem Y-kodierten Steckverbinder insbesondere feldkonfektionierbar verwendet werden können, wodurch die Vorteile, für die Crimpen bekannt ist, nämlich ihre ergonomische Herstellung sowie ihr langzeitstabiles und sicheres Leitverhalten mit geringem Übergangswiderstand, vorteilhafterweise auch für die typische hybride Bauform von Steckverbindern ermöglicht sind.

Zumindest eines der beiden besagten Kontaktträgerteile, also das erste und/oder das zweite Kontaktträgerteil, besitzt die besagte Halterung, an dem das Y-förmige Schirmelement haltbar/befestigbar ist. Bevorzugt besitzt das erste Kontaktträgerteil diese Halterung. Durch das Y-förmige Schirmelement ist gewährleistet, dass die Paare von Signalkontaktaufnahmen sowohl voneinander als auch von den Energiekontaktaufnahmen durch je einen Abschnitt des Schirmelements trennbar sind.

Ein weiterer Vorteil ist, dass der Mittenkontakt, bei dem es sich um einen Energiekontakt handelt, aus Steckrichtung betrachtet im Wesentlichen mittig im Steckgesicht des Kontaktträgers angeordnet sein kann, weil dadurch der zur Verfügung stehende Platz besonders vorteilhaft ausgenutzt wird, was besonders vorteilhaft durch die mehrteilige Bauform des Isolierkörpers ermöglicht wird. "Im Wesentlichen mittig" bedeutet in diesem Zusammenhang, dass der Abstand einer Symmetrieachse der Grundform des Mittenkontakts zu einer Symmetrieachse der Grundform des Kontaktträgers nicht mehr als 20%, bevorzugt nicht mehr als 15%, insbesondere nicht mehr als 10% und besonders bevorzugt nicht mehr als 5% des Durchmessers des Kontaktträgers beträgt.

Beispielsweise kann der Kontaktträger eine zylindrische Form besitzen, weil er z.B. für einen Rundsteckverbinder vorgesehen ist. Der Rundstecker kann beispielsweise von der Art sein, wie sie in der Norm IEC 61076-2-113 aus dem Jahr 2017 beschrieben ist. In diesem Beispiel kann der Durchmesser des Kontaktträgers 8,3 mm betragen. Der Mittenkontakt kann dann um 0,4 mm "of axis" liegen, d.h. der Abstand der besagten beiden Symmetrieachsen ist dann geringer als 5% des Durchmessers des Kontaktträgers.

Von Vorteil ist, dass dieser Mittenkontakt zur elektrischen Energieübertragung vorgesehen ist, es sich also um einen Energiekontakt handelt. Schließlich haben die Energiekontakte einen größeren Platzbedarf als die Signalkontakte. Weiterhin ist es zur Signaltrennung vorteilhaft, zumindest zwei Signalkontakte, bevorzugt zwei Signalkontaktpaare, durch das Y-förmige Schirmkreuz sowohl voneinander als auch von den Energiekontakten zu trennen.

Die Crimpkontakte weisen jeweils einen kabelanschlussseitigen Crimpanschluss und gegenüberliegend einen Steckbereich auf. Der Steckbereich kann durch einen Kontaktstift oder eine Kontaktbuchse gebildet sein.

In einer bevorzugten Ausgestaltung weisen die Crimpkontakte jeweils einen im wesentlichen zylinderförmigen Steckbereich auf, durch den jeweils ein Kontaktstift ausgebildet ist. In diesem Fall handelt es sich bei den Crimpkontakten also um Stiftkontakte. "Im wesentlichen" bedeutet in diesem Zusammenhang unter anderem, dass der Steckbereich an seinem Ende abgerundet sein kann. Auch kann sich der Durchmesser des Signalkontakts bereichsweise entlang der Steckrichtung auf das steckseitige Ende zu geringfügig verjüngen. Dann können die Kontaktstifte der Signalkontakte einen Durchmesser besitzen, der zumindest abschnittsweise einen leicht konischen Verlauf besitzt aber abschnittsweise auch, insbesondere im endseitigen Steckbereich, zylindrisch ausgeführt ist. In einer anderen Ausgestaltung können die Kontaktstifte über ihren gesamten Bereich hinweg zylindrisch ausgeführt sein. Weiterhin können die Steckbereiche der Signalkontakte einen geringeren Durchmesser besitzen als die Steckbereiche der Energiekontakte.

In einer alternativen Ausgestaltung handelt es sich bei den Crimpkontakten um Buchsenkontakte. Sie weisen dann jeweils einen im Wesentlichen hohlzylinderförmigen Steckbereich auf, durch den jeweils eine Kontaktbuchse ausgebildet ist. Die Kontaktbuchsen der Energiekontakte können einen Innendurchmesser besitzen, der größer ist als der Innendurchmesser der Kontaktbuchsen der Signalkontakte.

Dementsprechend können die Energiekontaktaufnahmen des Isolierkörpers zumindest bereichsweise auch einen größeren Durchmesser besitzen als die Signalkontaktaufnahmen.

Der Anschluss des Kabels an den Steckverbinder findet üblicherweise während der Installation des Steckverbinders, also beim Kunden und in der Regel auch durch den Kunden des Steckverbinders statt.

Im Gegensatz zu anderen kabelseitigen Kontaktierungsmethoden, wie z.B. dem Anlöten der einzelnen Kabellitzen an je einen Kabelanschlussbereich eines Steckkontakts, muss ein Crimpanschluss aber bereits vor dem Einbau in den Kontaktträger konfektioniert werden, d.h. jeder Crimpkontakt wird grundsätzlich zunächst außerhalb des Kontaktträgers an seinem kabelanschlussseitigen Crimpanschluss mit einem elektrischen Leiter, z.B. der Ader, eines mehradrigen Kabels, vercrimpt und erst dann in den Kontaktträger eingefügt.

Durch die Mehrteiligkeit des Kontaktträgers wird dem kundenseitigen Wunsch nach einer Feldkonfektionierbarkeit des Steckverbinders Rechnung getragen, d.h. der Kunde kann den Stecker selbst mit üblichen Werkzeugen, z.B. einer Crimpzange, konfektionieren, also in diesem Fall vercrimpen, und dann erst in den Kontaktträger einfügen. Dadurch kann er beispielsweise am Einsatzort die richtigen Kabellängen bestimmen sowie den Stecker an fest installierte Kabel anschließen, etc.

Insbesondere ist es von Vorteil, dass der Kunde bei Bedarf ein Steckgesicht mit einem Mittenkontakt verwenden kann. Durch einen solchen Mittenkontakt lässt sich, insbesondere bei einem Rundsteckverbinder, die Steckfläche besser ausnutzen und so die Anzahl der Steckkontakte erhöhen. Viele übliche Steckgesichter entsprechender Gegenstecker weisen einen solchen Mittenkontakt auf, so dass dessen Ermöglichung auch aus Kompatibilitätsgründen von besonders großem Vorteil ist.

Dazu ist es vorteilhaft, dass der Kontaktträger mehrteilig ausgeführt ist, weil dadurch der Mittenkontakt zwischen zumindest zwei Kontaktträgerteilen, insbesondere dem ersten und dem zweiten Kontaktträgerteil, angeordnet sein kann. Insbesondere kann der Kontaktträger drei Kontaktträgerteile aufweisen, von denen zumindest zwei Kontaktträgerteile, nämlich ein erstes und ein zweites Kontaktträgerteil, aneinander fixierbar, insbesondere verrastbar, sind. Dadurch kann der Kontaktträger bei der Installation des Steckverbinders zunächst mit den Crimpkontakten versehen und dann montiert, d.h. zusammengesetzt, werden. Insbesondere gilt dies bei Verwendung des besagten "Mittenkontakts", der sich grundsätzlich dadurch auszeichnet, dass sein Steckbereich im Wesentlichen mittig im Steckgesicht eines Steckverbinders, zu welchem der Kontaktträger gehört, angeordnet ist.

Der Kunde, der als Anwender des Steckverbinders angesehen werden kann, ist also in der Lage, bei der Montage zunächst die Steckkontakte kabelanschlussseitig mit elektrischen Leitern, z.B. den Adern eines mehradrigen elektrischen Kabels, zu vercrimpen. Danach können die insbesondere am Einsatzort vercrimpten Steckkontakte in den ersten Kontaktträgerteil und in den zweiten Kontaktträgerteil des Isolierkörpers eingefügt werden. Daraufhin können diese beiden Kontaktträgerteile des Isolierkörpers zusammengesetzt werden, wobei an zumindest einem der Kontaktträgerteile oder zwischen ihnen zumindest bereichsweise zumindest ein Teil des Y-förmigen Schirmelements angeordnet ist. Bevorzugt kann zumindest eines der beiden Kontaktträgerteile, insbesondere das erste Kontaktträgerteil, zum Halten des Y-förmigen Schirmelements die besagte Halterung aufweisen, an der das Y-förmige Schirmelement gehalten ist. Zusätzlich kann das Y-förmige Schirmelement zwischen dem ersten und dem zweiten Kontaktträgerteil durch deren gegenseitige Befestigung fixiert sein.

Ein- oder mehrere Kontaktträgerteile können sich beim Zusammensetzen zumindest teilweise formschlüssig an die dazugehörigen Abschnitte des Y-förmigen Schirmelements anfügen. Kabelanschlussseitig können zumindest zwei Kontaktträgerteile an das Y-förmigen Schirmelement angefügt sein und somit kabelanschlussseitig über das Y-förmigen Schirmelement hinausstehen. So können sie bevorzugt in diesem Bereich aneinander befestigt sein, beispielsweise durch gegenseitiges Verrasten. Insbesondere können sie auch dadurch das Y-förmige Schirmelement zumindest bereichsweise zwischen einander halten und dadurch vorteilhafterweise zusätzlich befestigen.

Das Y-förmige Schirmelement ist aus einem elektrisch leitenden Material gebildet oder weist zumindest elektrisch leitende Bereiche, z.B. eine elektrisch leitende Beschichtung auf. Insbesondere kann das Y-förmigen Schirmelement aus Metall bestehen. Das Y-förmige Schirmelement weist vorteilhafterweise elektrisch und/oder magnetisch schirmende Eigenschaften auf. Insbesondere kann das Schirmelement als Zinkdruckgussteil ausgebildet und mit Nickel beschichtet sein. Dadurch kann eine besonders gute elektrische und/oder magnetische Schirmung erreicht werden.

Das Y-förmige Schirmelement ist einstückig ausgeführt, besitzt also drei Schirmabschnitte, nämlich einen ersten, einen zweiten und einen dritten Schirmabschnitt, die an einer gemeinsamen Achse aneinander angeformt sind. Insbesondere kann das Y-förmige Schirmelement in seiner Grundform im Wesentlichen spiegelsymmetrisch ausgeführt sein, wobei die Spiegelebene durch den ersten Schirmabschnitt verläuft.

In einer vorteilhaften Ausgestaltung sind das erste und das zweite Kontaktträgerteil aneinander fixierbar. Insbesondere sind sie dadurch gegen eine Bewegung rechtwinklig zur Steckrichtung, insbesondere gegen eine Bewegung voneinander weg, fixiert.

In einer besonders vorteilhaften Ausgestaltung stellt das Y-förmige Schirmelement, insbesondere durch angeformte Verdrehschutzflächen, einen Verdrehschutz dieser beiden Kontaktträgerteile zueinander dar. Dies erleichtert die Herstellung, gegenüber einer Variante, in welcher dies durch die Isolierkörper selbst geschehen müsste. Dadurch benötigt das Spritzgusswerkzeug der Kontaktträger vorteilhafterweise keine Vorrichtungen zur Herstellung derartiger Verdrehschutzmittel, wie z.B. zusätzliche Schieber für dem Verdrehschutz dienen Verrastungen, Zapfen oder dergleichen.

In einer weiteren bevorzugten Ausgestaltung ist ein drittes Kontaktträgerteil des bevorzugt dreiteiligen Kontaktträgers durch eine Hülse mit einer kabelanschlussseitigen Einführöffnung gebildet. Durch diese Aufnahmehülse sind das erste und das zweite Kontaktträgerteil im aneinander fixierten Zustand gemeinsam mit dem daran gehaltenen Y-förmigen Schirmelement und insbesondere auch mit den im Kontaktträger aufgenommenen Crimpkontakten in die Hülse einschiebbar.

Das dritte Kontaktträgerteil kann weiterhin der Einführöffnung gegenüberliegend einen Steckabschnitt mit Durchgangsöffnungen besitzen, welche zur steckseitigen Durchführung von Steckbereichen der Crimpkontakte und und/oder zur Durchführung eines steckseitigen Abschnitts des Y-förmigen Schirmelements geeignet sind. Vorteilhafterweise können die Durchgangsöffnungen ihnen dazu in Anordnung und Form entsprechen.

In diesem Steckabschnitt des Kontaktträgers kann einer der insbesondere vier Energiekontakte, nämlich der Mittenkontakt, mit seinem Steckbereich im Wesentlichen mittig angeordnet sein.

Ein Verfahren zur Montage eines solchen Kontaktträgers kann folgende Schritte aufweisen:
- Anbringen des Y-förmigen Schirmelements an der Halterung des mehrteiligen Kontaktträgers;
- Vercrimpen elektrischer Leiter an den Crimpkontakten;
- Einlegen des Mittenkontakts in die dazugehörige Energiekontaktaufnahme des mehrteiligen Kontaktträgers;
- gegenseitiges Fixieren des ersten und des zweiten Kontaktträgerteils aneinander;
- Einbringen der Signalkontakte in die Signalkontaktaufnahmen des ersten Kontaktträgerteils und Einbringen der Energiekontakte, mit Ausnahme des bereits eingebauten Mittenkontakts, in die Energiekontaktaufnahmen des zweiten Kontaktträgerteils;
- gemeinsames Einschieben des ersten und zweiten Kontaktträgerteils mit dem daran gehaltenen Y-förmigen Schirmelement und darin aufgenommenen Crimpkontakten durch die Einführöffnung des dritten Kontaktträgerteils in das dritte Kontaktträgerteil.

Der erstgenannte Verfahrensschritt, nämlich das Anbringen des Y-förmigen Schirmelements an der Halterung des mehrteiligen Kontaktträgers, kann bereits werkseitig durchgeführt werden, d.h. der Kunde erhält das erste Kontaktträgerteil vom Steckverbinderhersteller mit dem daran vormonierten Schirmelement, kann die weiteren Verfahrensschritte aber selbst durchführen. Dadurch wird eine feldkonfektionierbare Vercrimpung eines Steckverbinders mit einem Mittenkontakt ermöglicht.

Durch das endgültige Einschieben der ersten beiden aneinander fixierten Kontaktträgerteile in das dritte Kontaktträgerteil können die Steckbereiche der Crimpkontakte in die Durchgangsöffnungen ein- und bevorzugt auch hindurchgeführt werden, so dass sie, insbesondere wenn es sich um Stiftkontakte handelt, steckseitig hervorstehen oder, wenn es sich um Buchsenkontakte handelt, beispielsweise aber auch mit der Steckfläche abschließen können.

Selbstverständlich ist die Reihenfolge der Verfahrensschritte nicht grundsätzlich bindend. Einige der Verfahrensschritte können, wo es dem Fachmann sinnvoll erscheint, auch in einer anderen Reihenfolge abgearbeitet werden. Es wird an dieser Stelle auf eine genauere Auflistung sämtlicher möglicher Reihenfolgen der Verfahrensschritte verzichtet, da die Bildung einer sinnvollen Reihenfolge nach den vorangegangenen Überlegungen dem Verständnis und den Fähigkeiten eines Durchschnittsfachmanns zuzurechnen ist.

Zusammenfassend aber nicht beschränkend ist dem Fachmann aus den vorstehenden Betrachtungen unter anderem folgende Ausgestaltung offenbart: Zur Aufnahme der acht elektrischen Crimpkontakte, nämlich vier elektrischer Signalkontakte und vier elektrischer Energiekontakte sowie eines Y-förmigen Schirmelements in den hybriden elektrischen Steckverbinder kann der Kontaktträger mehrteilig, insbesondere dreiteilig, ausgeführt sein. Dabei sind die Signalkontaktaufnahmen zur Aufnahme der Signalkontakte im ersten Kontaktträgerteil angeordnet. Der Mittenkontakt kann je nach Bauform am ersten oder ab zweiten Kontaktträgerteil angeordnet sein und insbesondere daran verrastet werden. Die weiteren Energiekontaktaufnehmen sind zur Aufnahme der weiten Energiekontakte im zweiten Kontaktträgerteil angeordnet. Bei der Befestigung dieser beiden Kontaktträgerteile aneinander kann der Mittenkontakt somit zwischen den beiden Kontaktträgerteilen, nämlich dem ersten und dem zweiten Kontaktträgerteil, zu liegen kommen und dort gehalten sein. Außerdem wird das Y-förmige Schirmelement an einer Halterung des ersten Kontaktträgerteils gehalten und kann dabei bereichsweise zwischen dem ersten und zweiten Kontaktträgerteil angeordnet sein. Diese Anordnung, bestehend aus dem ersten und dem zweiten Kontaktträgerteil, den darin aufgenommenen Crimpkontakten und dem daran gehaltenen Y-förmigen Schirmelement, wird dann gemeinsam in das dritte Kontaktträgerteil eingeschoben. Dabei wird ein steckseitiger Abschnitt des dritten Kontaktträgerteils von den Steckbereichen der Crimpkontakte und dem Y-förmigen Schirmkreuz durchgriffen. Der Mittenkontakt ist dabei mit seinem Steckbereich im Wesentlichen mittig im Steckgesicht des Steckverbinders angeordnet. Gleichzeitig sind die Signalkontaktpaare voneinander und von den Energiekontakten durch je einen Abschnitt des Y-förmigen Schirmelements elektrisch und/oder magnetisch abgeschirmt.

### Ausführungsbeispiel

Ein Ausführungsbeispiel der Erfindung ist in den Zeichnungen dargestellt und wird im Folgenden näher erläutert. Es zeigen:
- Fig. 1a - d: einen dreiteiligen Kontaktträger;
- Fig. 2a, b: zwei Crimpkontakte;
- Fig. 3: ein Y-förmiges Schirmelement;
- Fig. 4a, b: das erste Kontaktträgerteil mit dem Schirmelement;
- Fig. 5a: ein mehradriges Kabel mit angecrimpten Crimpkontakten;
- Fig. 5b: das Kabel mit einem in das zweite Kontaktträgerteil eingelegten Mittenkontakt;
- Fig. 6a, b: das erste Kontaktträgerteil in einer zweiten Ausführungsform;
- Fig. 7a, b: das vorgenannte Kontaktträgerteil mit dem Schirmelement und dem Mittenkontakt;
- Fig. 8a, b: die vorgenannte Anordnung mit dem zusätzlich daran gehaltenen Schirmelement und dem daran verrasteten zweiten Kontaktträgerteil in einer zweiten Ausführungsform;
- Fig. 9a - d: den Rastmechanismus zwischen dem ersten und dem zweiten Kontaktträgerteil;
- Fig. 10a - c: die Anordnung aus der Fig. 8 mit den zusätzlich eingelegten restlichen Crimpkontakten;
- Fig. 11a: die vorgenannte Anordnung mit dem dritten Kontaktträgerteil im einzuführenden Zustand;
- Fig. 11b - c: die vorgenannte Anordnung im eingeführten Zustand;
- Fig. 12a: die vorgenannte Anordnung mit einem Schirmanbindungselement;
- Fig. 12b: die vorgenannte Anordnung mit einem ausgewählten Dichtungsring;
- Fig. 12c - e: die vorgenannte Anordnung mit einem Steckverbindergehäuse, einer Kabelverschraubung und einer steckseitigen Rändelschraube.

Die Figuren enthalten Teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

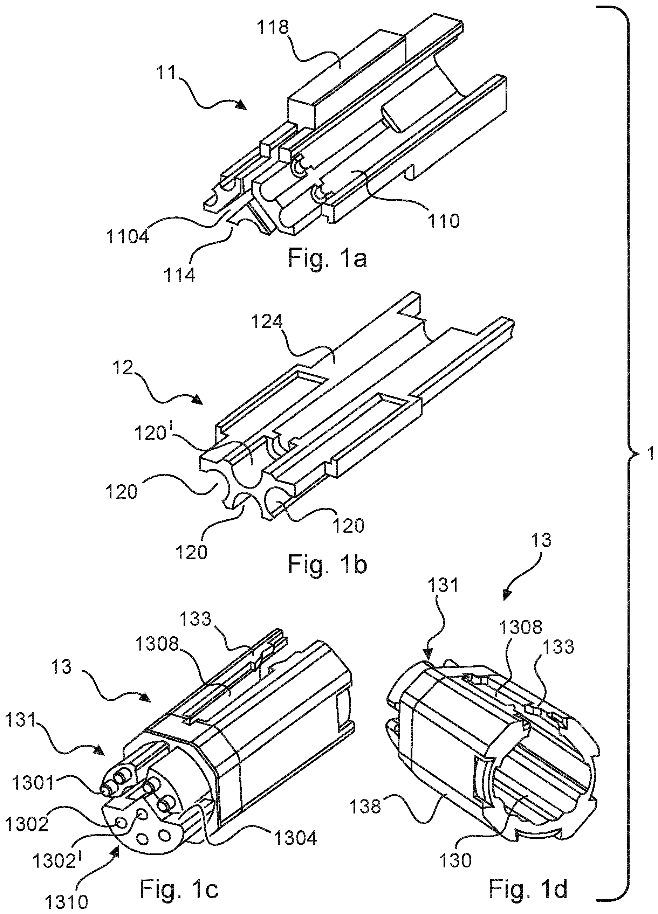

Die Fig. 1a - d zeigen einen dreiteiligen Kontaktträger 1, der aus einem ersten 11, einem zweiten 12 und einem dritten 13 Kontaktträgerteil besteht.

Die Fig. 1a zeigt das erste Kontaktträgerteil 11 in einer ersten Ausführung. Dieses Kontaktträgerteil 11 besitzt im Wesentlichen die Grundform eines dreiseitigen, gleichschenkligen Prismas, dessen Querschnitt also durch ein gleichschenkliges Dreieck gebildet ist. In jeder Schenkelfläche der prismaähnlichen Grundform sind zwei nach außen geöffnete Signalkontaktaufnahmen 110 angeordnet. An ihrer gemeinsamen Schenkelkante ist in einem in Steckrichtung mittleren Abschnitt eine quaderförmige Rastanformung 118 angeformt. Steckseitig schließt sich an diese Rastanformung 118 ein Y-förmiger Aufnahmeschlitz 1104 an. Basisseitig wird der Y-förmige Aufnahmeschlitz 1104 durch eine Halterung 114 begrenzt.

Die Fig. 1b zeigt das zweite Kontaktträgerteil 12 in einer ersten Ausführung. Dieses besitzt vier Energiekontaktaufnahmen 120, 120', von denen eine als Mittenkontaktaufnahme 120' ausgeführt und in einer Kontaktfläche 124 angeordnet ist, welche beim Zusammenfügen mit dem ersten Kontaktträgerteil 11 an dessen Basisfläche und deren Halterung 114 anschließt. Der Kontaktfläche 124 gegenüberliegend besitzt das zweite Kontaktträgerteil 12 eine im Querschnitt kreissegmentartig verlaufende Außenkontur, in welcher die weiteren drei Energiekontaktaufnahmen 120 nach außen geöffnet angeordnet sind.

Die Fig. 1c und 1d zeigen das dritte Kontaktträgerteil 13, das im Wesentlichen hülsenförmig ausgeführt ist. Steckseitig besitzt das dritte Kontaktträgerteil 13 einen Steckabschnitt 131 mit einer Steckseite 1310 durch welche Durchgangsöffnungen 1301, 1302, 1302', 1304 verlaufen. Dabei handelt es sich um Signalkontaktdurchgangsöffnungen 1301, Energiekontaktdurchgangsöffnungen 1302 mit einer Mittenkontaktdurchgangsöffnung 1302' sowie eine im Wesentlichen Y-förmige Schirmelementdurchgangsöffnung 1304. "Im Wesentlichen" bedeutet in diesem Fall, dass die zueinander spiegelsymmetrischen Abschnitte der Y- Form in ihren Endbereichen voneinander fortweisend abknicken.

An den Steckabschnitt 131 anschließend besitzt das dritte Kontaktträgerteil 13 einen hülsenförmigen Grundabschnitt 138 mit einer der Steckfläche 1310 gegenüberliegend angeordneten, kabelanschlussseitigen Einführöffnung 130. An diese Einführöffnung 130 anschließend ist im Grundabschnitt 138 ein kabelanschlussseitig geöffneter Rastschlitz 1308 in Steckseitiger Richtung verlaufend angeordnet. Beidseitig daran angeformt und seitlich in den Rastschlitz 1308 hineinragend sind auf einander zu weisend Rasthaken 133 an den Schlitzkanten in den Grundabschnitt 138 eingebracht. Kabelanschlussseitig besitzen die Rasthaken 133 Aufgleitschrägen.

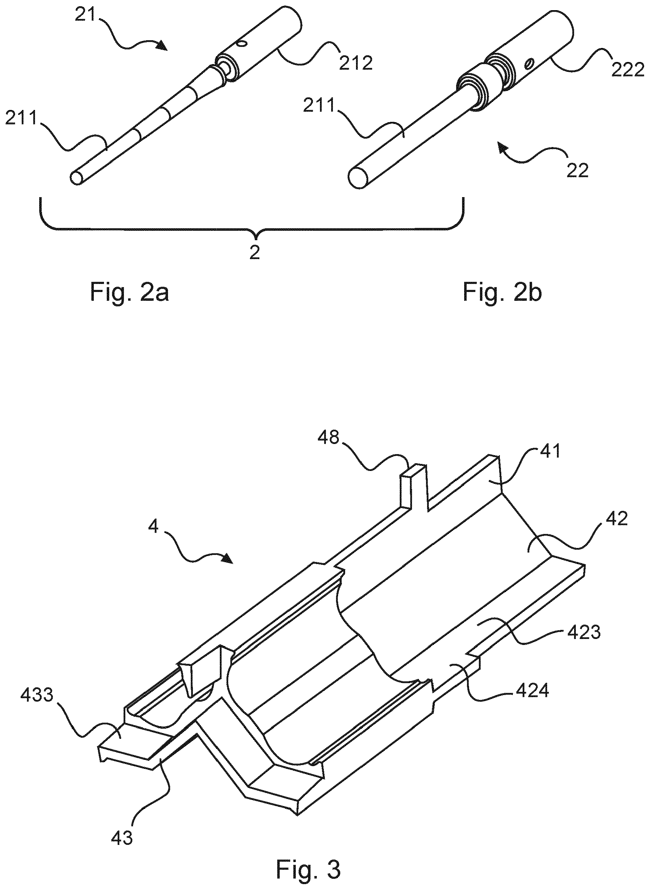

Die Fig. 2a und 2b zeigen zwei Arten von Crimpkontakten 2, d.h. Steckkontakte mit kabelanschlussseitigen Crimpanschlüssen 212, 222.

Den Crimpanschlüssen 212, 222 gegenüberliegend sind Kontaktstifte mit im Wesentlichen zylinderförmigen Steckbereichen 211, 221 angeordnet. Steckseitig sind die Kontaktstifte an ihren Steckbereichen 211, 221 abgerundet. Der Kontaktstift des Energiekontakts 22 ist weiterhin zylinderförmig ausgeführt. Der Kontaktstift des Signalkontakts 21 verläuft zumindest in seinem Steckbereich 211 zylinderförmig aber in zumindest einem weiteren nicht näher bezeichneten Abschnitt leicht konisch.

Die Fig. 3 zeigt ein im Wesentlichen, d.h. abgesehen von geringfügigen Abweichungen spiegelsymmetrisch ausgeführtes, Y-förmiges Schirmelement 4.

Dieses weist einen ersten 41, einen zweiten 42 und einen dritten 43 Abschnitt auf. Die beiden zueinander spiegelsymmetrischen Abschnitte, nämlich der zweite 42 und der dritte 43 Abschnitt der Y- Form, verlaufen zunächst schräg auseinander und knicken dann durch an in ihren Endbereichen angeformte Verdrehschutzflächen 423,433 voneinander fortweisend ab. An ihren Außenbereichen besitzen die Verdrehschutzflächen 423, 433 zusätzlich jeweils eine Anschlagstufte 424, von denen in der Zeichnung nur eine zu sehen ist, weil die andere vom ersten Abschnitt 41 des Schirmelements 4 verdeckt ist.

Der erste Abschnitt 41 des Schirmelements 4 liegt im Wesentlichen in dessen Symmetrieebene. An deren Außenkante ist eine Anschlagsanformung 48 angeformt, welche im Folgenden auch die Funktion eines Masseanbindungselements erfüllt.

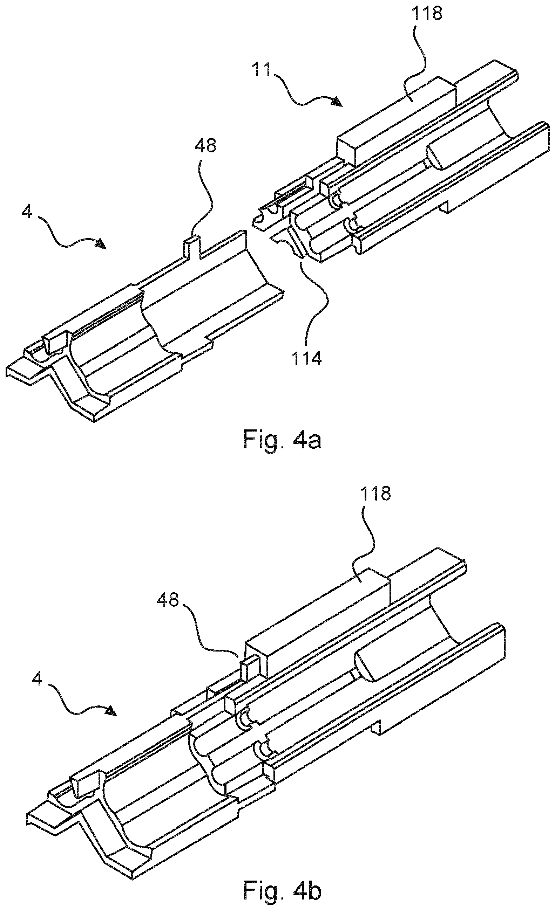

Die Fig. 4a und 4b zeigen das erste Kontaktträgerteil 11 zusammen mit dem Y-förmigen Schirmelement 4, welches in den Y-förmigen Aufnahmeschlitz 1104 des ersten Kontaktträgerteils 11 eingeschoben und so an dessen Halteabschnitt 114 gehalten wird. Im eingeschobenen Zustand schlägt die Anschlagsanformung 48 des Schirmelements 4 gegen die quaderförmige Rastanformung 118 des ersten Kontaktträgerteils 11 und verhindert dadurch ein tieferes Einschieben.

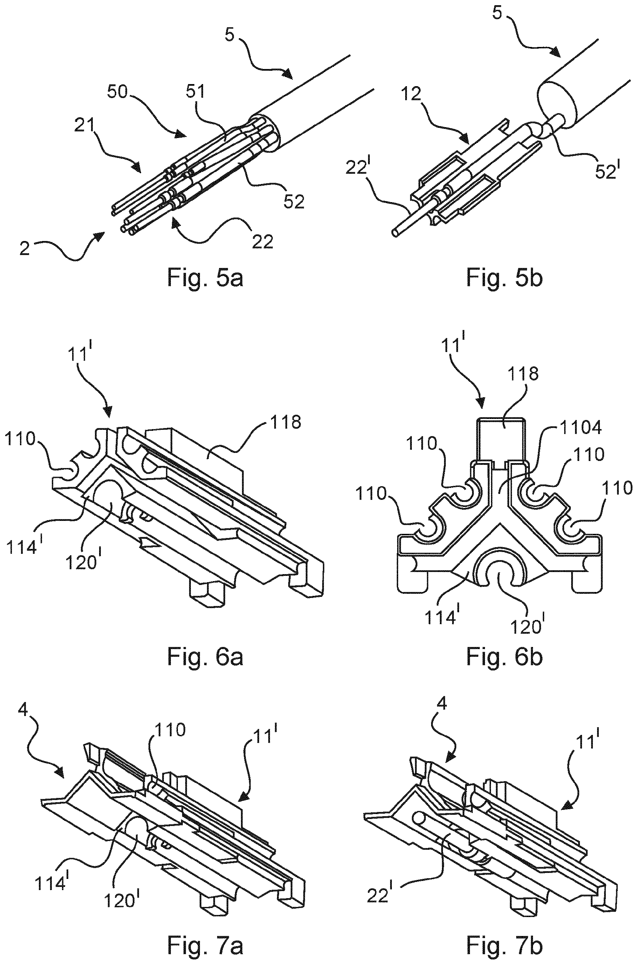

Die Fig. 5a zeigt ein Kabel 5, nämlich ein sogenanntes Hybridkabel, das sich dadurch auszeichnet, dass es sowohl Signaladern 51 zur elektrischen Signalübertragung als auch Energieadern 52 zur elektrischen Energieübertragung, besitzt. Dieses Kabel 5 besitzt insgesamt acht Adern 50, nämlich vier Signaladern 51 und vier Energieadern 52, welche jeweils zumindest von einer elektrischen Isolierung und ggf. auch von einem Schirm umgeben sind. In einem abisolierten Bereich ist jede der Adern 51, 52 mit einem Crimpanschluss 212, 222 eines Crimpkontakts 21, 22, 22' vercrimpt.

In der Fig. 5b ist nur eine Energieader 52' dargestellt; die anderen Energieadern 52 sind aus Übersichtlichkeitsgründen nicht gezeigt. Diese Energieader 52' ist an den Crimpanschluss 222 eines Energiekontakts, nämlich eines Mittenkontakts 22', angeschlossen. Der Mittenkontakt 52' ist in die Mittenausnehmung 120' des zweiten Kontaktträgerteils 12 (erste Ausführung) eingelegt. Es ist leicht vorstellbar, dass durch das Zusammenfügen des zweiten Kontaktträgerteils 12 mit dem ersten Kontaktträgerteil 11 aus der Fig. 4b der Mittenkontakt 22' im Steckgesicht automatisch im Wesentlichen mittig angeordnet ist (vergl. Fig. 1a und b).

Im Folgenden soll jedoch auch eine zweite Ausführung des Kontaktträgers vorgestellt werden.

Die Fig. 6a zeigt ein erstes Kontaktträgerteil 11' in einer zweiten Ausführung. Dies unterscheidet sich von dem vorangegangenen Kontaktträgerteil 11 dadurch, dass an seiner Halterung 114 die Mittenkontaktaufnahme 120' angeordnet ist. D.h., der Mittenkontakt 22' kann bei dieser Bauform an der Halterung 114 des ersten Kontaktträgerteils 11 verrasten.

Wie aus den Fig. 7a und b hervorgeht, sind die Signalkontaktaufnahmen 110 dennoch durch das Y-förmige Schirmelement 4 voneinander getrennt, da sich die Halterung 114 diesbezüglich auf der Seite der Energiekontaktaufnahmen 120 befindet.

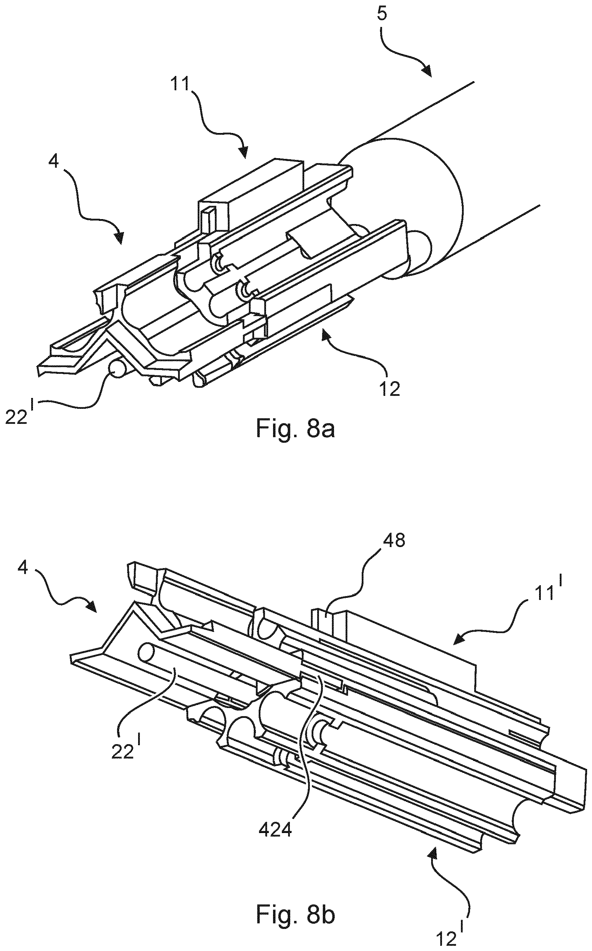

Die Fig. 8a zeigt das erste 11 und zweite 12 Kontaktträgerteil mit dem Y-förmigen Schirmelement 4 und dem eingelegten Mittenkontakt 22' in der ersten Ausführungsform.

Die Fig. 8b zeigt das erste 11' und zweite 12' Kontaktträgerteil mit dem Y-förmigen Schirmelement 4 und dem eingelegten Mittenkontakt 22' in der zweiten Ausführungsform. Dabei ist die Funktion der Anschlagstufe 424 besonders gut zu sehen. Die Anschlagstufe 424 verhindert, dass das sich zweite Kontaktträgerteil 12' in Richtung der Steckseite, also in der Zeichnung nach links, verschiebt.

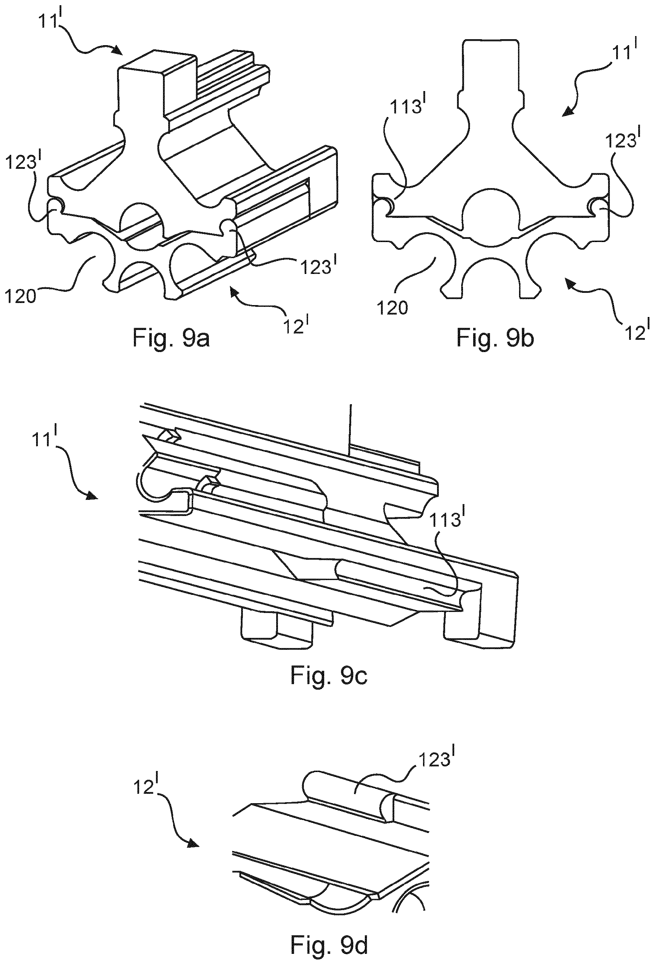

Die Fig. 9a - d zeigen am Beispiel der zweiten Ausführung einen Rastmechanismus zur Fixierung des ersten 11'und des zweiten 12' Kontaktträgerteils aneinander.

Die Fig. 9a und 9b zeigen das erste 11' und das zweite 12' Kontaktträgerteil im verrasteten Zustand im Schnitt durch den kabelanschlussseitigen Abschnitt.

Dazu besitzt das erste Kontaktträgerteil 11' in einem kabelanschlussseitigen Abschnitt an seinen beiden Schenkelenden einander gegenüberliegend je eine Rastausnehmung 113', welche im vorliegenden Beispiel hohlzylindersegmentartig ausgeführt und in der Fig. 9d und c explizit bezeichnet ist.

In der Fig. 9d ist als Gegenstück dazu ein zylindersegmentartige Rastanformung 123' explizit dargestellt.

Es ist leicht vorstellbar, dass über die Elastizität des Kunststoffmaterials, insbesondere durch eine leichte Verformung des zweiten Kontaktträgerteils 12', eine Verrastung dieser beiden Kontaktträgerteile 11', 12' miteinander ermöglicht wird.

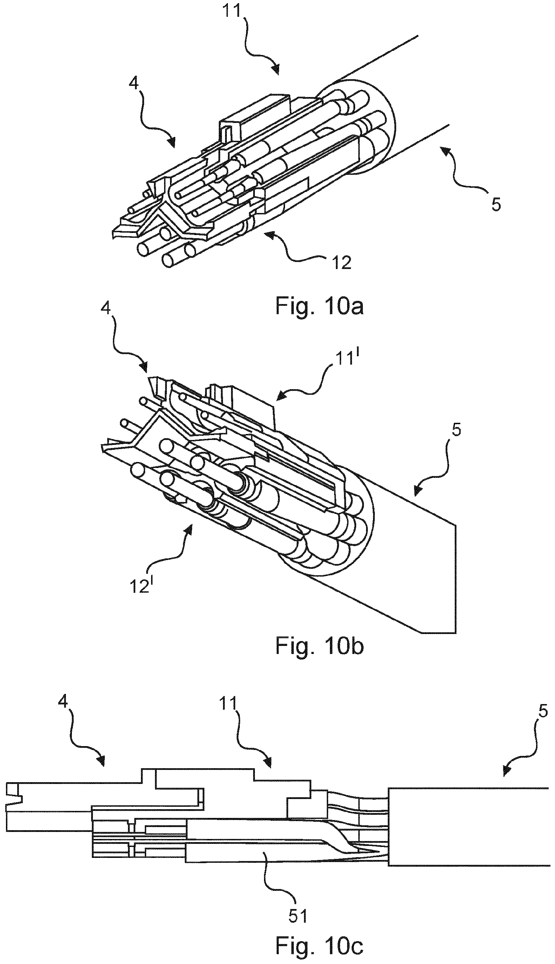

Die Fig. 10a - b zeigen diese verrastete Anordnung mit dem Y-förmigen Schirmelement und eingelegten Crimpkontakten 2, in der ersten (Fig. 10a) und der zweiten (Fig. 10b) Ausführung.

Die Fig. 10c zeigt diese Anordnung ohne die Crimpkontakte 2 im Querschnitt. Daraus wird ersichtlich, dass das Y-förmige Schirmkreuz 4 in Steckrichtung mit den Isolierungen und ggf. auch dem Schirm der Adern 51 "überlappt".

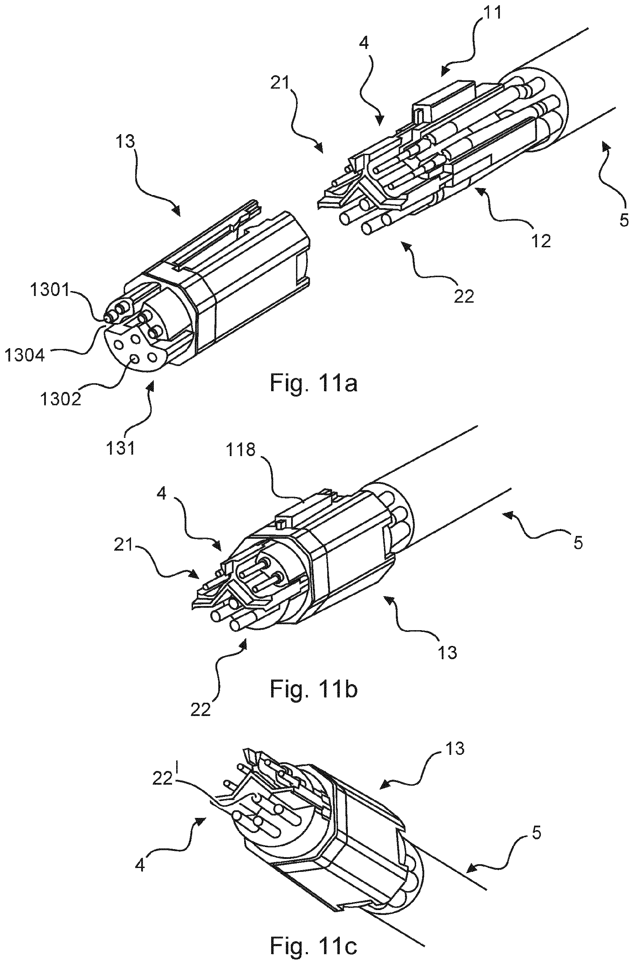

Die Fig. 11 zeigt die vorgenannte Anordnung zusammen mit dem dritten, hülsenförmigen Kontaktträgerteil 13.

In der Fig. 11a ist diese Anordnung noch getrennt von dem dritten Kontaktträgerteil 13, nämlich der Hülse, dargestellt und ist im Begriff, durch deren Einführöffnung 130 in die Hülse 13 eingeschoben zu werden.

Die Fig. 11b und 11c zeigen die Anordnung in einem in die Hülse 13 (drittes Kontaktträgerteil) eingeschobenen Zustand. Dabei ist die quaderförmige Rastanformung 118 in den Rastschlitz 1308 eingebracht und daran mittels der Rasthaken 133 verrastet (vergl. Fig. 1c und d). Der Kontaktträger 1 ist somit montiert und der Mittenkontakt 22' ist im Wesentlichen mittig im Steckgesicht, d.h. aus Steckrichtung betrachtet mitten im Steckabschnitt 131, angeordnet. Auch die weiteren Crimpkontakte 21, 22 sind in dem Kontaktträger aufgenommen und ragen mit ihren jeweiligen Steckbereichen 211, 221 durch die entsprechenden Durchgangsöffnungen 1301, 1302 des Steckabschnitts 131.

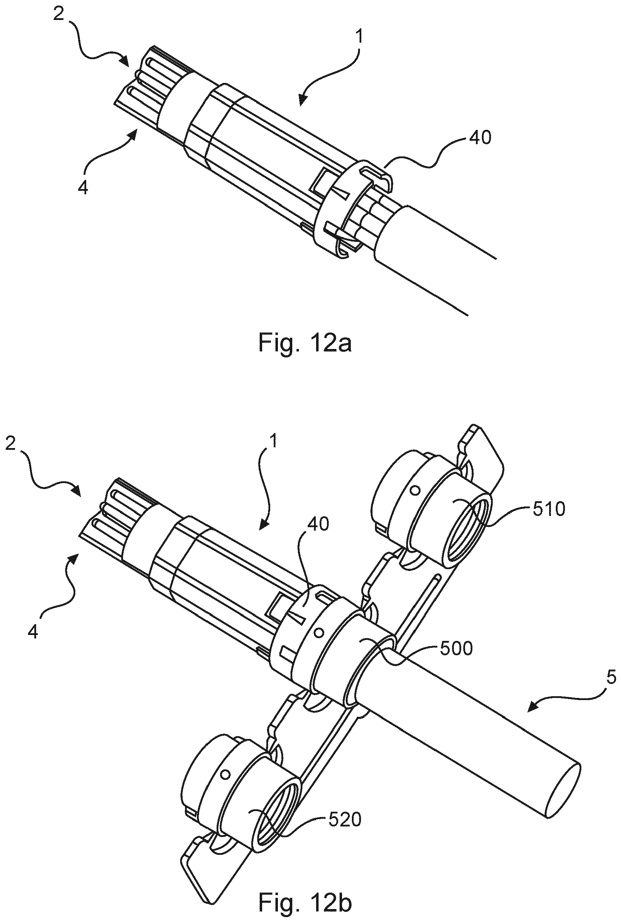

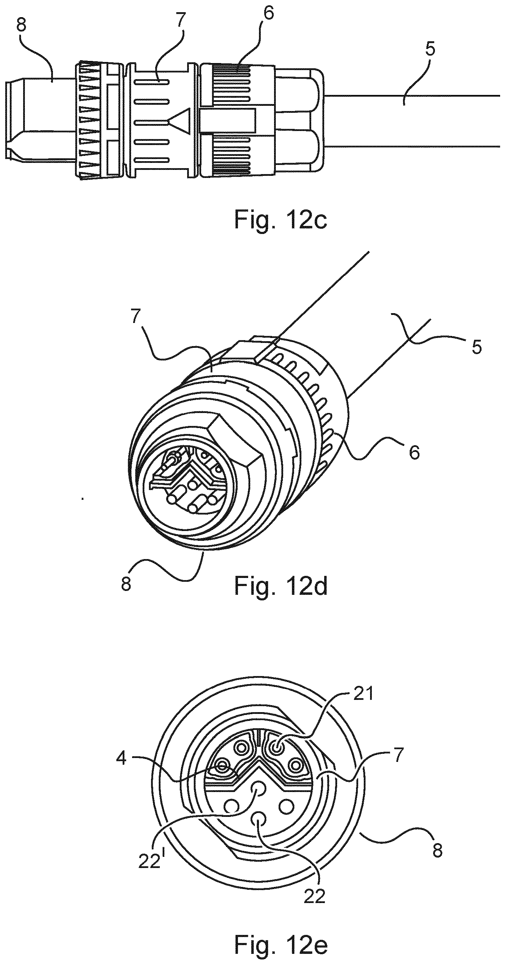

Die Fig. 12a zeigt den mit Crimpkontakten 2 und Schirmkreuz 4 versehenen, montierten Kontaktträger 1, der mit einem im wesentlichen hohlzylindrischen Schirmanbindungselement 40, welches dazu vorgesehen ist, ein aus Übersichtlichkeitsgründen nicht dargestelltes Schirmgeflecht des Kabels 5 mit einem im Folgenden gezeigten metallisches Steckverbindergehäuse 7 zu verbinden.

Die Fig. 12b zeigt zudem eine Auswahl an Dichtungselementen in Form von Dichtungsringen 500, 510, 520, welche sich in ihrem Innendurchmesser unterscheiden und für unterschiedliche Kabelquerschnitte vorgesehen sind.

Die Fig. 12c - e zeigen aus verschiedenen Ansichten den kompletten, montierten Steckverbinder mit angeschlossenem Kabel 5 aus jeweils einer Außenansicht. Der Steckverbinder besitzt eine Kabelverschraubung 6 mit angeformter Überwurfmutter, welche kabelanschlussseitig an das eigentliche Steckverbindergehäuse 7 angeschraubt ist und so das Kabel 5 am Steckverbindergehäuse 7 fixiert. Steckseitig ist an dem Steckverbindergehäuse 7 eine Rändelschraube 8 zur steckseitigen Verriegelung/ Verschraubung mit einem Gegenstecker drehbar gehalten.

Insbesondere zeigt die Fig.12e, wie der Mittenkontakt 22' aus Steckrichtung betrachtet im Wesentlichen mitten im Steckabschnitt 131, d.h. im Wesentlichen mittig im Steckgesicht, angeordnet ist. Bei genauer Betrachtung erkennt der Fachmann, dass der Mittenkontakt 22' nicht ganz genau auf der Mittelachse liegt, sondern in der Zeichnung etwa um 5% des Durchmessers nach unten versetzt angeordnet ist. Dies entspricht beispielsweise der Norm IEC 61076-2-113 von 2017.

Zumindest das Steckverbindergehäuse 7 besteht aus einem metallischen Material. Auch die Kabelverschraubung 6 und die Rändelschraube 8 können aus stabilitäts- und Schirmungsgründen aus einem metallischen Material oder in einer weiteren Ausführung auch aus Kunststoff bestehen.

Auch wenn in den Figuren verschiedene Aspekte oder Merkmale der Offenbarung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Kontaktträger (mehrteilig)

- 11, 11': erstes Kontaktträgerteil (Signalkontaktträger)
- 110: Signalkontaktaufnahmen
- 1104: Y-förmiger Aufnahmeschlitz
- 113': Rastausnehmung
- 114, 114': Halterung
- 118: quaderförmige Rastanformung

- 12: zweites Kontaktträgerteil (Energiekontaktträger)
- 120, 120': Energiekontaktaufnahmen, Mittenkontaktaufnahme
- 123': zylindersegmentartige Rastanformung
- 124: Kontaktfläche

- 13: drittes Kontaktträgerteil (Hülse)
- 130: kabelanschlussseitige Einführöffnung
- 1301: Signalkontaktdurchgangsöffnung
- 1302, 1302': Energiekontaktdurchgangsöffnung, Mittenkontaktdurchgangsöffnung
- 1304: Schirmelementdurchgangsöffnung
- 1308: Rastschlitz
- 131: Steckabschnitt
- 1310: Steckfläche
- 133: Rasthaken

- 2: Crimpkontakte
- 21: Signalkontakt(e)
- 211: Steckbereich (Signalkontakt)
- 212: Crimpanschluss (Signalkontakt)
- 22, 22': Energiekontakt(e); Mittenkontakt
- 221: Steckbereich (Energiekontakt)

- 4: Y-förmiges Schirmelement
- 41: erster Abschnitt des Y-förmigen Schirmelements
- 42: zweiter Abschnitt des Y-förmigen Schirmelements
- 43: dritter Abschnitt des Y-förmigen Schirmelements
- 423,433: Verdrehschutzflächen
- 424: Anschlagstufe

- 40: Schirmanbindungselement

- 48: Anschlagsanformung/ Masseanbindungselement

- 5: mehradriges elektrisches ("Hybrid"-)Kabel
- 50: Adern des Kabels
- 51: Signaladern
- 52: Energieadern

- 500, 510, 520: verschiedene Dichtungselemente/ Dichtungsringe

- 6: Kabelverschraubung / Überwurfmutter

- 7: Steckverbindergehäuse

- 8: Rändelschraube / steckseitige Verriegelung

## Patentansprüche

1. Kontaktträger (1) für einen Steckverbinder, zur Aufnahme mindestens vier elektrischer Crimpkontakte (2), von denen mindestens zwei als Signalkontakte (21) und mindestens zwei weitere als Energiekontakte (22) ausgeführt sind, wobei der Kontaktträger (1) zu diesem Zweck mindestens zwei Signalkontaktaufnahmen (110) und mindestens zwei Energiekontaktaufnahmen (120) besitzt und weiterhin mehrteilig ausgeführt ist, wobei ein erstes Kontaktträgerteil (11) die zumindest zwei Signalkontaktaufnahmen (110) und ein zweites Kontaktträgerteil (12) zumindest eine der Energiekontaktaufnahmen (120) aufweist, wobei eine weitere der Energiekontaktaufnahmen als Mittenkontaktaufnahme (120') im Kontaktträger (1) zwischen dem ersten (11) und dem zweiten (12) Kontaktträgerteil zur Aufnahme eines der Energiekontakte, bei dem es sich um einen Mittenkontakt (22') handelt, angeordnet ist, so dass der gesamte Kontaktträger (1) insgesamt mindestens vier Kontaktaufnahmen (110, 120, 120') besitzt, **dadurch gekennzeichnet, dass** zumindest eines der beiden besagten Kontaktträgerteile (11, 12) eine Halterung (114) aufweist, durch die im Kontaktträger (1) ein Y-förmiger Aufnahmeschlitz (1104) gebildet ist, so dass an der Halterung (114) ein Y-förmiges Schirmelement (4) haltbar ist, durch welches zumindest zwei Signalkontaktaufnahmen (110) sowohl voneinander als auch von den Energiekontaktaufnahmen (120, 120') trennbar sind.

2. Kontaktträger (1) nach Anspruch 1, wobei das erstes Kontaktträgerteil (11) zwei Paare von Signalkontaktaufnahmen (110) aufweist, die voneinander zumindest bereichsweise durch einen Teil des Y-förmigen Aufnahmeschlitzes (1104) getrennt und so durch einen ersten Abschnitt (41) des Y-förmigen Schirmelements (4) trennbar sind.

3. Kontaktträger (1) nach einem der vorstehenden Ansprüche, wobei das zweite Kontaktträgerteil (12) mindestens drei Energiekontaktaufnahmen (120, 120') aufweist, die von den Signalkontaktaufnahmen (110) durch einen weiteren Teil des Aufnahmeschlitzes (1104) zumindest Bereichsweise getrennt und jeweils durch einen zweiten (42) oder dritten (43) Abschnitt des Schirmelements (4) trennbar sind.

4. Kontaktträger (1) nach einem der vorstehenden Ansprüche, wobei das zweite Kontaktträgerteil (12) eine Kontaktfläche (124) besitzt, in der die Mittenkontaktaufnahme (120') angeordnet ist.

5. Kontaktträger (1) nach einem der Ansprüche 1 bis 3, wobei die Mittenkontaktaufnahme (120') an der Halterung (114') des ersten Kontaktträgerteils (11') angeordnet ist.

6. Kontaktträger (1) nach einem der vorstehenden Ansprüche, **dadurch gekennzeichnet, dass** das erste (11, 11') und das zweite (12, 12') Kontaktträgerteil aneinander fixierbar sind.

7. Kontaktträger (1) nach Anspruch 6, **dadurch gekennzeichnet, dass** ein drittes Kontaktträgerteil (13) durch eine Hülse mit einer kabelanschlussseitigen Einführöffnung (130) gebildet ist, durch welche das erste (11, 11') und das zweite Kontaktträgerteil (12, 12') im aneinander fixierten Zustand gemeinsam mit dem daran gehaltenen Y-förmigen Schirmelement (4) und den weiterhin daran fixierten Crimpkontakten (2) in das hülsenförmige dritte Kontaktträgerteil (13) einschiebbar sind.

8. Kontaktträger (1) nach Anspruch 7, **dadurch gekennzeichnet, dass** das dritte Kontaktträgerteil (13) der Einführöffnung (130) gegenüberliegend einen Steckabschnitt (131) mit Durchgangsöffnungen (1301, 1302, 1302', 1304) besitzt, welche zur Durchführung von Steckbereichen (211, 221) der besagten Crimpkontakte (2) sowie zur Durchführung eines steckseitigen Abschnitts des Y-förmigen Schirmelements (4) geeignet sind.

9. Kontaktträger (1) nach Anspruch 8, **dadurch gekennzeichnet, dass** eine der Durchgangsöffnungen, nämlich eine mittlere Durchgangsöffnung (1302'), der steckseitigen Durchführung des Mittenkontakts (22'), dient und in dem Steckabschnitt (131) des Kontaktträgers (1) aus Steckrichtung betrachtet im Wesentlichen mittig angeordnet ist.

10. Kontaktträger (1) gemäß einem der vorstehenden Ansprüche, wobei der Kontaktträger (1) eine zylinderförmige Grundform aufweist und zum Einsatz in einem Rundsteckverbinder vorgesehen ist.

11. System aus einem Kontaktträger (1) gemäß einem der vorstehenden Ansprüche, einem Y-förmigen Schirmelement (4) und acht Crimpkontakten (2), von denen vier als Signalkontakte (21) und von denen vier weitere als Energiekontakte (22) ausgeführt sind, wobei die Crimpkontakte (2) jeweils einen zylinderförmigen Steckbereich (211, 221) aufweisen, der jeweils als Kontaktstift ausgebildet ist, wobei die Kontaktstifte (211) der Signalkontakte (21) einen Durchmesser aufweisen, der kleiner ist als der Durchmesser der Kontaktstifte (221) der Energiekontakte (22).

12. System aus einem Kontaktträger (1) gemäß einem der Ansprüche 1 bis 10, einem Y-förmigen Schirmelement (4) und acht Crimpkontakten (2), von denen vier als Energiekontakte und von denen vier weitere als Signalkontakte ausgeführt sind und, wobei die Crimpkontakte (2) jeweils einen hohlzylinderförmigen Steckbereich aufweisen, durch den jeweils eine Kontaktbuchse ausgebildet ist, wobei die Kontaktbuchsen der Energiekontakte einen Innendurchmesser aufweisen, der größer ist als der Innendurchmesser der Kontaktbuchsen der Signalkontakte.

13. System gemäß einem der Ansprüche 11 bis 12, wobei
- die Signalkontakte (21) in die Signalkontaktaufnahmen (110) des ersten Kontaktträgerteils (11) eingefügt sind,
- die Energiekontakte (22, 22') in die Energiekontaktaufnahmen (120) des ersten (11) und/oder des zweiten (12) Kontaktträgerteils eingefügt sind, wobei
- das Y-förmigen Schirmelement (4) an dem ersten Kontaktträgerteil (11) fixiert ist, wobei das erste (11, 11') und das zweite (12, 12') Kontaktträgerteil aneinander verrastet sind, wobei
- das erste (11, 11') und das zweite (12, 12') Kontaktträgerteil im aneinander fixierten Zustand zusammen mit dem Y-förmigen Schirmelement (4) und den Crimpkontakten (2) in das dritte, hülsenförmig ausgeführte Kontaktträgerteil (13) eingeführt sind, wobei
- die Steckbereiche (211, 221) der Crimpkontakte (2) sowie ein steckseitiger Abschnitt des Schirmkreuzes (4) zumindest teilweise in den Durchgangsöffnungen (1301, 1302, 1304) des Steckabschnitts (131) des dritten Kontaktträgerteils (13) angeordnet sind.

14. System gemäß Anspruch 13, wobei der Mittenkontakt (22') in der Mittenkontaktaufnahme (120') aufgenommen und dadurch im Wesentlichen mittig im Kontaktträger (1) angeordnet ist.

15. Steckverbinder, aufweisend ein System nach einem der Ansprüche 11 bis 14, einem Steckverbindergehäuse (7) mit einer steckseitigen Verriegelung (8) und einer Kabelverschraubung (6) sowie zumindest einem Dichtungselement (500, 510, 520).

16. Verfahren zur Montage eines Systems nach einem der Ansprüche 11 bis 14, **gekennzeichnet durch** folgende Schritte:
- Anbringen des Y-förmigen Schirmelements (4) an der Halterung (14, 14') des mehrteiligen Kontaktträgers (1);
- Vercrimpen elektrischer Leiter (52, 52') an den Crimpkontakten (2);
- Einlegen des Mittenkontakts (22') in die dazugehörige Energiekontaktaufnahme (120') des mehrteiligen Kontaktträgers (1);
- gegenseitiges Fixieren des ersten und des zweiten Kontaktträgerteils (11, 11', 12, 12') aneinander;
- Einbringen der restlichen Energiekontakte (22) in die Energiekontaktausnehmungen (120) des zweiten Kontaktträgerteils (12) und der vier Signalkontakte (21) in die Signalkontaktausnehmungen (110) des zweiten Kontaktträgerteils (11, 11');
- gemeinsames Einschieben des ersten (11, 11') und des daran fixierten zweiten (12, 12') Kontaktträgerteils mit dem daran gehaltenen Y-förmigen Schirmelement (4) und den darin aufgenommenen Crimpkontakten (2) durch die Einführöffnung (130) in das dritte Kontaktträgerteil (13).

## Claims

1. Contact carrier (1) for a plug connector, for receiving at least four 'electrical crimp contacts (2), of which at least two are designed as signal contacts (21) and at least a further two are designed as power contacts (22),
wherein, for this purpose, the contact carrier (1) has at least two signal contact receptacles (110) and at least two power contact receptacles (120) and is furthermore designed in multiple parts, wherein a first contact carrier part (11) comprises the at least two signal contact receptacles (110) and a second contact carrier part (12) comprises at least one of the power contact receptacles (120), wherein a further one of the power contact receptacles is arranged as a central contact receptacle (120') in the contact carrier (1), between the first (11) and the second (12) contact carrier part, for receiving one of the power contacts, which is a central contact (22'), so that the entire contact carrier (1) has a total of at least four contact receptacles (110, 120, 120'), **characterized in that** at least one of the two said contact carrier parts (11, 12) comprises a holder (114), by means of which a Y-shaped receiving slot (1104) is formed in the contact carrier (1) so that a Y-shaped shield element (4) can be held on the holder (114), by means of which shield element at least two signal contact receptacles (110) can be separated both from each other and from the power contact receptacles (120, 120').

2. Contact carrier (1) according to Claim 1, wherein the first contact, carrier part (11) comprises two pairs of signal contact receptacles (110), which are separated from each other, at least in certain areas, by part of the Y-shaped receiving slot (1104) and can thus be separated by a first portion (41) of the Y-shaped shield element (4).

3. Contact carrier (1) according to one of the preceding claims, wherein the second contact carrier part (12) comprises at least three power contact receptacles (120, 120'), which are separated from the signal contact receptacles (110), at least in certain areas, by a further part of the receiving slot (1104), and can each be separated by a second (42) or third (43) portion of the shield element (4).

4. Contact carrier (1) according to one of the preceding claims, wherein the second contact carrier part (12) has a contact surface (124) in which the central contact receptacle (120') is arranged.

5. Contact carrier (1) according to one of Claims 1 to 3, wherein the central contact receptacle (120') is arranged on the holder (114') of the first contact carrier part (11').

6. Contact carrier (1) according to one of the preceding claims, **characterized in that** the first (11, 11') and the second (12, 12') contact carrier part can be fixed to each other.

7. Contact carrier (1) according to Claim 6, **characterized in that** a third contact carrier part (13) is formed by a sleeve with an insertion opening (130) on the cable connection side, through which the first (11, 11') and the second contact carrier part (12, 12') in the fixed-together state, together with the Y-shaped shield element (4) held thereon and the crimp contacts (2) furthermore fixed thereto, can be pushed into the sleeve-shaped third contact carrier part (13).

8. Contact carrier (1) according to Claim 7, **characterized in that** the third contact carrier part (13) has, opposite the insertion opening (130), a mating portion (131) with through-openings (1301, 1302, 1302', 1304), which are suitable for guiding-through mating areas (211, 221) of the said crimp contacts (2) and for guiding-through a mating-side portion of the Y-shaped shield element (4) .

9. Contact carrier (1) according to Claim 8, **characterized in that** one of the through-openings, namely a central through-opening (1302'), serves for guiding-through the central contact (22') on the mating side and is arranged substantially centrally in the mating portion (131) of the contact carrier (1), as seen from the mating direction.

10. Contact carrier (1) according to one of the preceding claims, wherein the contact carrier (1) has a cylindrical basic shape and is provided for use in a circular plug connector.

11. System comprising a contact carrier (1) according to one of the preceding claims, a Y-shaped shield element (4) and eight crimp contacts (2), of which four are designed as signal contacts (21) and of which a further four are designed as power contacts (22), wherein the crimp contacts (2) each comprise a cylindrical mating area (211, 221), which is formed as a contact pin in each case, wherein the contact pins (211) of the signal contacts (21) have a diameter which is smaller than the diameter of the contact pins (221) of the power contacts (22).

12. System comprising a contact carrier (1) according to one of Claims 1 to 10, a Y-shaped shield element (4) and eight crimp contacts (2), of which four are designed as power contacts and of which a further four are designed as signal contacts, and wherein the crimp contacts (2) each comprise a hollow cylindrical mating area by means of which a respective contact socket is formed, wherein the contact sockets of the power contacts have an internal diameter which is greater than the internal diameter of the contact sockets of the signal contacts.

13. System according to one of Claims 11 to 12, wherein
- the signal contacts (21) are integrated in the signal contact, receptacles (110) of the first contact carrier part (11),
- the power contacts (22, 22') are integrated in the power contact receptacles (120) of the first (11) and/or the second (12) contact carrier part, wherein
- the Y-shaped shield element (4) is fixed to the first contact carrier part (11), wherein the first (11, 11') and the second (12, 12') contact carrier part are latched to one another, wherein
- the first (11, 11') and the second (12, 12') contact carrier part in the fixed-together state, together with the Y-shaped shield element (4) and the crimp contacts (2), are inserted into the third contact carrier part (13) designed in the shape of a sleeve, wherein
- the mating areas . (211, 221) of the crimp contacts (2) and a mating-side portion of the shield cross (4) are arranged at least partially in the through-openings (1301, 1302, 1304) of the mating portion (131) of the third contact carrier part (13).

14. System according to Claim 13, wherein the central contact (22') is received in the central contact receptacle (120') and thus arranged substantially centrally in the contact carrier (1).

15. Plug connector, comprising a system according to one of Claims 11 to 14, a plug connector housing (7) with a mating side locking means (8) and a cable gland (6) and at least one sealing element (500, 510, 520).

16. Method for assembling a system according to one of Claims 11 to 14, **characterized by** the following steps:
- mounting the Y-shaped shield element (4) on the holder (14, 14') of the multi-part contact carrier (1);
- crimping electrical conductors (52, 52') to the crimp contacts (2);
- placing the central contact (22') in the associated power contact receptacle (120') of the multi-part contact carrier (1);
- mutually fixing the first and the second contact carrier part (11, 11', 12, 12') to each other;
- incorporating the remaining power contacts (22) in the power contact receptacles (120) of the second contact carrier part (12) and the four signal contacts (21) in the signal contact receptacles (110)of the second contact carrier part (11, 11');
- jointly pushing the first (11, 11') contact carrier part and the second (12, 12') contact carrier part, fixed thereto, with the Y-shaped shield element (4) held thereon and the crimp contacts (2) received therein into the third contact carrier part (13) through the insertion opening (130).

## Revendications

1. Support de contact (1) pour un connecteur enfichable, servant au logement d'au moins quatre contacts électriques à sertir (2), parmi lesquels au moins deux sont réalisés sous forme de contacts de signaux (21) et au moins deux autres sont réalisés sous forme de contacts d'énergie (22) ,
le support de contact (1) possédant à cet effet au moins deux logements de contacts de signaux (110) et au moins deux logements de contacts d'énergie (120) et étant en outre réalisé en plusieurs parties, une première partie de support de contact (11) comprenant les au moins deux logements de contacts de signaux (110) et une deuxième partie de support de contact (12) comprenant au moins l'un des logements de contact d'énergie (120), un autre des logements de contacts d'énergie étant disposé en tant que logement de contact de central (120') dans le support de contact (1) entre la première (11) et la deuxième (12) partie de support de contact pour le logement de l'un des contacts d'énergie, qui est un contact central (22'), de sorte que tout le support de contact (1) possède dans l'ensemble au moins quatre logements de contact (110, 120, 120'), **caractérisé en ce qu'**au moins l'une des deux dites parties de support de contact (11, 12) comprend un élément de retenue (114) par lequel une fente de logement (1104) en forme de Y est formée dans le support de contact (1), de sorte qu'un élément de blindage (4) en forme de Y puisse être retenu sur l'élément de retenue (114), élément de blindage par lequel au moins deux logements de contacts de signaux (110) peuvent être séparés non seulement l'un de l'autre mais aussi des logements de contact d'énergie (120, 120').

2. Support de contact (1) selon la revendication 1, la première partie de support de contact (11) comprenant deux paires de logements de contacts de signaux (110) qui sont séparées l'une de l'autre au moins dans certaines régions par une partie de la fente de logement (1104) en forme de Y et peuvent donc être séparées par une première section (41) de l'élément de blindage (4) en forme de Y.

3. Support de contact (1) selon l'une des revendications précédentes, la deuxième partie de support de contact (12) comprenant au moins trois logements de contacts d'énergie (120, 120') qui sont séparés des logements de contacts de signaux (110) par une autre partie de la fente de logement (1104) au moins dans certaines régions et peuvent être séparés respectivement par une deuxième (42) ou une troisième (43) section de l'élément de blindage (4).

4. Support de contact (1) selon l'une des revendications précédentes, la deuxième partie de support de contact (12) possédant une surface de contact (124) dans laquelle le logement de contact central (120') est disposé.

5. Support de contact (1) selon l'une des revendications 1 à 3, le logement de contact central (120') étant disposé au niveau de l'élément de retenue (114') de la première partie de support de contact (11').

6. Support de contact (1) selon l'une des revendications précédentes, **caractérisé en ce que** la première (11, 11') et la deuxième (12, 12') partie de support de contact peuvent être fixées l'une à l'autre.

7. Support de contact (1) selon la revendication 6, **caractérisé en ce qu'**une troisième partie de support de contact (13) est formée par une douille dotée d'une ouverture d'introduction (130) coté raccord de câble, ouverture à travers laquelle la première (11, 11') et la deuxième partie de support de contact (12, 12') peuvent être insérées, dans l'état fixé l'une à l'autre et conjointement avec l'élément de blindage (4) en forme de Y retenu dans celles-ci et les composants à sertir (2) en outre fixés dans celle-ci, dans la troisième partie de support de contact (13) en forme de douille.

8. Support de contact (1) selon la revendication 7, **caractérisé en ce que** la troisième partie de support de contact (13) possède, à l'opposé de l'ouverture d'introduction (130), une section enfichable (131) dotée d'ouvertures traversantes (1301, 1302, 1302', 1304), lesquelles sont appropriées pour le passage de régions enfichables (211, 221) desdits contacts à sertir (2) ainsi que pour le passage d'une section, côté enfichage, de l'élément de blindage (4) en forme de Y.

9. Support de contact (1) selon la revendication 8, **caractérisé en ce que** l'une des ouvertures traversantes, à savoir une ouverture traversante centrale (1302'), sert au passage, côté enfichage, du contact de central (22'), et est disposée dans la section enfichable (131) du support de contact (1) de manière essentiellement centrale considérée dans la direction d'enfichage.

10. Support de contact (1) selon l'une des revendications précédentes, le support de contact (1) présentant une forme de base cylindrique et étant prévu pour être utilisé dans un connecteur enfichable circulaire.

11. Système constitué d'un support de contact (1) selon l'une des revendications précédentes, d'un élément de blindage (4) en forme de Y et de huit contacts à sertir (2), parmi lesquels quatre sont réalisés sous forme de contacts de signaux (21) et parmi lesquels quatre autres sont réalisés sous forme de contacts d'énergie (22), les contacts à sertir (2) comprenant respectivement une région enfichable (211, 221) cylindrique, qui est réalisée respectivement sous forme de broche de contact, les broches de contact (211) des contacts de signaux (21) présentant un diamètre qui est inférieur au diamètre des broches de contact (221) des contacts d'énergie (22).

12. Système constitué d'un support de contact (1) selon l'une des revendications 1 à 10, d'un élément de blindage (4) en forme de Y et de huit contacts à sertir (2), parmi lesquels quatre sont réalisés sous forme de contacts d'énergie et parmi lesquels quatre autres sont réalisés sous forme de contacts de signaux, et les contacts à sertir (2) comprenant respectivement une région enfichable cylindrique creuse, par laquelle respectivement une douille de contact est formée, les douilles de contact des contacts d'énergie présentant un diamètre intérieur qui est supérieur au diamètre intérieur des douilles de contact des contacts de signaux.

13. Système selon l'une des revendications 11 à 12, dans lequel
- les contacts de signaux (21) sont insérés dans les logements de contacts de signaux (110) de la première partie de support de contact (11).,
- les contacts d'énergie (22, 22') sont insérés dans les logements de contacts d'énergie (120) de la première (11) et/ou de la deuxième (12) partie de support de contact, dans lequel
- l'élément de blindage (4) en forme de Y est fixé à la première partie de support de contact (11), dans lequel la première (11, 11') et la deuxième (12, 12') partie de support de contact sont encliquetées l'une avec l'autre, dans lequel
- la première (11, 11') et la deuxième (12, 12') partie de support de contact sont, dans l'état fixé l'une à l'autre et conjointement avec l'élément de blindage (4) en forme de Y et les contacts à sertir (2), insérées dans la troisième partie de support de contact (13) réalisée en forme de douille, dans lequel
- les régions enfichables (211, 221) des contacts à sertir (2) ainsi qu'une section côté enfichage de la croix de blindage (4) sont disposées au moins partiellement dans les ouvertures traversantes (1301, 1302, 1304) de la section enfichable (131) de la troisième partie de support de contact (13).

14. Système selon la revendication 13, le contact central (22') étant reçu dans le logement de contact central (120') et étant donc disposé essentiellement centralement dans le support de contact (1).

15. Connecteur enfichable, comprenant un système selon l'une des revendications 11 à 14, un boîtier de connecteur enfichable (7) doté d'un verrouillage (8) côté enfichage et d'un presse-étoupe (6) ainsi que d'au moins un élément d'étanchéité (500, 510, 520).

16. Procédé de montage d'un système selon l'une des revendications 11 à 14, **caractérisé par** les étapes suivantes :
- placement de l'élément de blindage (4) en forme de Y sur l'élément de retenue (14, 14') du support de contact (1) en plusieurs parties ;
- sertissage de conducteurs électriques (52, 52') sur les contacts à sertir (2) ;
- introduction du contact de central (22') dans le logement de contact d'énergie (120') associé du support de contact (1) en plusieurs parties ;
- fixation réciproque de la première, et de la deuxième partie de support de contact (11, 11', 12, 12') l'une à l'autre ;
- introduction des contacts d'énergie (22) restants dans les évidements de contact d'énergie (120) de la deuxième partie de support de contact (12) et des quatre contacts de signaux (21) dans les évidements de contacts de signaux (110) de la deuxième partie de support de contact (11, 11') ;
- insertion commune de la première (11, 11') et de la deuxième (12, 12') partie de support de contact fixée sur celle-ci avec l'élément de blindage (4) en forme de Y retenu sur celles-ci et les contacts à sertir (2) logés dans celles-ci à travers l'ouverture d'introduction (130) dans la troisième partie de support de contact (13).
